# EUROPEAN PATENT APPLICATION

(11) **EP 3 419 329 A1**
(43) Date of publication of application: **26.12.2018**
(21) Application number: 16890203.9
(22) Date of filing: 19.02.2016
(51) Int. Cl.: H04W 28/16

(54) **APPARATUS AND METHOD FOR INFORMATION TRANSMISSION AND COMMUNICATION SYSTEM**

(71) Applicant: Fujitsu Limited, Kawasaki-shi, Kanagawa 211-8588 (JP)
(72) Inventor: SONG, Lei, Beijing 100025 (CN); WANG, Weiwei, Beijing 100025 (CN); WANG, Xin, Beijing 100025 (CN)
(74) Representative: Haseltine Lake LLP
(86) International application number: PCT/CN2016/074129
(87) International publication number: WO 2017/139970

(57) **Abstract**

An information transmission apparatus and method and a communication system. The information transmission method includes: receiving, by a user equipment, first channel information corresponding to a channel between a first base station and a second base station transmitted by the first base station; and reporting identification information of the first base station and/or the first channel information to the second base station. Hence, the second base station making scheduling decision can obtain channel information necessary for flexible duplex transmission, thereby supporting that multiple devices perform flexible uplink and downlink transmission, and avoiding or alleviating interference between the multiple devices in performing uplink and downlink transmission.

## Description

### Technical Field

This disclosure relates to the field of wireless communication technologies, and in particular to an information transmission apparatus and method and a communication system.

### Background

In the studies of a time division duplex (TDD) system of long term evolution (LTE) in the 3rd generation partnership project (3GPP), enhanced interference management and traffic adaption (eIMTA) is taken as an adaption technique and is used for breaking fixed TDD frame structure configuration, so as to flexibly change an uplink and downlink ratio configuration.

However, change of TDD frame structure configuration of a cell has effect on neighboring cells. For example, two neighboring cells adopt opposite uplink and downlink configuration, which makes that there no longer simply exist interference of a base station on a user equipment and interference of the user equipment on the base station, rather, there exist interference of a base station on other base stations and interference of a user equipment on other user equipments.

Usually, as base stations are installed relatively high, paths between the base stations are mostly direct transmission paths and thus attenuation is relatively small, which increases interference between the base stations to some extent. In the studies of the eIMTA, in order to reduce interference, uplink and downlink reconfiguration of the cells are considerably restricted. For example, a TDD frame structure of a macro base station shall not be reconfigured, or it is only permitted that the uplink is reconfigured as downlink, or uplink and downlink reconfiguration is only permitted on individual subframes.

However, in a future 5th generation (5G) mobile communication system, communication scenarios will be more variable and network architectures will be more and more flexible, and demands for uplink and downlink traffic ratio configuration will be more and more flexible and variable, in which case restrictions in the eIMTA will no longer meet future traffic demands.

Therefore, the 5G will need a more flexible duplex mode, that is, taking the system interference into account, each cell may select uplink and downlink configuration according to traffic situations of user equipments of itself. Taking a heterogeneous network as an example, under coverage of a macro base station (which may be referred to, for example, an MTP), multiple transmission points (TPs) may support uplink and downlink transmission traffics. For example, the macro base station (MTP) performs downlink transmission, and a small base station (which may be referred to, for example, an STP) under its coverage may perform not only downlink transmission but also uplink transmission, which is related to demands for traffics of user equipments under the coverage of the STP.

On the contrary, the MTP may also perform uplink transmission, and the STP under the coverage of the MTP may perform not only downlink transmission but also uplink transmission. Such a flexible transmission mode may achieve flexible uplink and downlink traffic transmission.

Furthermore, different from multipoint transmission, base stations relatively near each other in flexible uplink and downlink scheduling may perform transmission jointly, and multiple base stations relatively far away from each other (even base stations having no connection therebetween by X2 interfaces) may be scheduled as performing flexible uplink and downlink transmission. Hence, schemes for suppressing interference (such as interference between base stations) need to be further enhanced.

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary

Embodiments of this disclosure provide an information transmission apparatus and method and a communication system, in which with feedback from a user equipment, a transmission point making-scheduling decision can obtain channel information necessary for flexible duplex transmission, thereby supporting multiple devices (such as multiple base stations relatively near each other, or multiple base stations having no connection therebetween by X2 interfaces, or multiple base stations having relative large backhaul latency) for performing flexible uplink and downlink transmission.

According to a first aspect of the embodiments of this disclosure, there is provided an information transmission method, including:
receiving, by a user equipment, first channel information corresponding to a channel between a first base station and a second base station, transmitted by the first base station; and
reporting identification information of the first base station to which the first channel information corresponds and/or the first channel information, to the second base station.

According to a second aspect of the embodiments of this disclosure, there is provided an information transmission apparatus, configured in a user equipment, the information transmission apparatus including:
an information receiving unit configured to receive first channel information corresponding to a channel between a first base station and a second base station, transmitted by the first base station; and
an information reporting unit configured to report identification information of the first base station to which the first channel information corresponds and/or the first channel information, to the second base station.

According to a third aspect of the embodiments of this disclosure, there is provided an information transmission method, including:
obtaining, by a first base station, first channel information corresponding to a channel between the first base station and a second base station; and
transmitting the first channel information corresponding to the channel between the first base station and the second base station, to a user equipment.

According to a fourth aspect of the embodiments of this disclosure, there is provided an information transmission apparatus, configured in a first base station, the information transmission apparatus including:
an information acquiring unit configured to obtain first channel information corresponding to a channel between the first base station and a second base station; and
an information transmitting unit configured to transmit the first channel information corresponding to the channel between the first base station and the second base station, to a user equipment.

According to a fifth aspect of the embodiments of this disclosure, there is provided an information transmission method, including:
receiving, by a second base station, first channel information corresponding to a channel between a first base station and the second base station and/or identification information of the first base station to which the first channel information corresponds, reported by a user equipment; and
receiving, by the second base station, second channel information corresponding to a channel between the user equipment and the second base station, reported by the user equipment.

According to a sixth aspect of the embodiments of this disclosure, there is provided an information transmission apparatus, configured in a second base station, the information transmission apparatus comprising:
a first information receiving unit configured to receive first channel information corresponding to a channel between a first base station and the second base station and/or identification information of the first base station to which the first channel information corresponds, reported by a user equipment; and
a second information receiving unit configured to receive second channel information corresponding to a channel between the user equipment and the second base station, reported by the user equipment.

According to a seventh aspect of the embodiments of this disclosure, there is provided a communication system, including:
a user equipment configured with the information transmission apparatus as described in the second aspect;
a first base station configured with the information transmission apparatus as described in the fourth aspect; and
a second base station configured with the information transmission apparatus as described in the six aspect.

An advantage of the embodiments of this disclosure exists in that the first base station obtains channel information corresponding to a channel between the first base station and the second base station and transmits the channel information to the user equipment, and the user equipment forwards the channel information to the second base station. Hence, the second base station making-scheduling decision can obtain channel information necessary for flexible duplex transmission, thereby supporting that multiple devices perform flexible uplink and downlink transmission, and avoiding or alleviating interference between the multiple devices in performing uplink and downlink transmission.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprise/include" when used in this specification is taken to specify the presence of stated features, integers, steps or components but does not preclude the presence or addition of one or more other features, integers, steps, components or groups thereof.

### Brief Description of the Drawings

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiment.
FIG. 1 is a flowchart of the information transmission method of Embodiment 1 of this disclosure;
FIG. 2 is a schematic diagram of transmitting first channel information by a first base station to a user equipment of Embodiment 1 of this disclosure;
FIG. 3 is a schematic diagram of reporting information by the user equipment to a second base station of Embodiment 1 of this disclosure;
FIG. 4 is another flowchart of the information transmission method of Embodiment 1 of this disclosure;
FIG. 5 is a further flowchart of the information transmission method of Embodiment 1 of this disclosure;
FIG. 6 is a flowchart of the information transmission method of Embodiment 2 of this disclosure;
FIG. 7 is a flowchart of the information transmission method of Embodiment 3 of this disclosure;
FIG. 8 is a schematic diagram of the information transmission apparatus of Embodiment 4 of this disclosure;
FIG. 9 is a schematic diagram of the user equipment of Embodiment 4 of this disclosure;
FIG. 10 is a schematic diagram of the information transmission apparatus of Embodiment 5 of this disclosure;
FIG. 11 is a schematic diagram of the base station of Embodiment 5 of this disclosure;
FIG. 12 is a schematic diagram of the information transmission apparatus of Embodiment 6 of this disclosure; and
FIG. 13 is a schematic diagram of the communication system of Embodiment 7 of this disclosure.

### Detailed Description

These and further aspects and features of the present disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the spirit and terms of the appended claims.

In the embodiments of the present disclosure, a base station may be referred to as an access point, a broadcast transmitter, a node B, or an evolved node B (eNB), etc., and may include some or all functions of them. A term "base station" shall be used in the text, and each base station provides communication coverage for a specific geographical region. A term "cell" may refer to a base station and/or a coverage region thereof, depending on the context using the term.

In the embodiments of the present disclosure, a mobile station or equipment may be referred to as a user equipment (UE). The UE may be fixed or mobile, and may also be referred to as a mobile station, a terminal, an access terminal, a user unit, or a station, etc. The UE may be a cellular phone, a personal digital assistant (PDA), a wireless modem, a wireless communication device, a handhold device, a lap-top computer, and a cordless telephone, etc.

### Embodiment 1

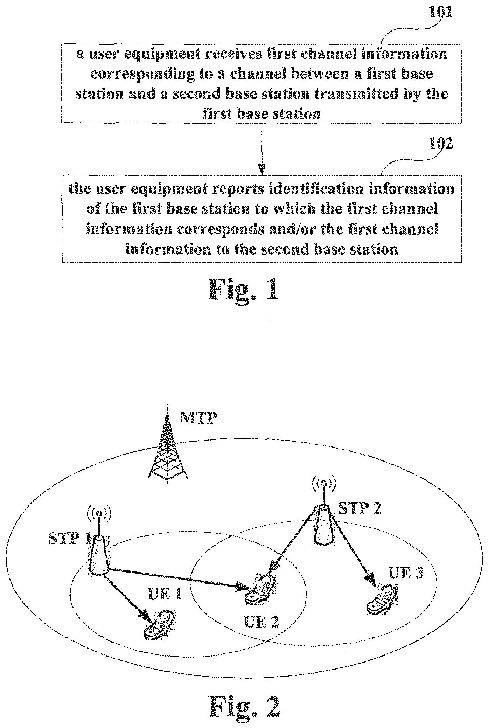

The embodiment of the present disclosure provides an information transmission method, applicable to a user equipment. FIG. 1 is a flowchart of the information transmission method of the embodiment of this disclosure, which shall be described from a user equipment side. As shown in FIG. 1, the information transmission method includes:
Block 101: a user equipment receives first channel information corresponding to a channel between a first base station and a second base station, transmitted by the first base station; and
Block 102: the user equipment reports identification information of the first base station to which the first channel information corresponds and/or the first channel information, to the second base station.

In an embodiment, description shall be given by taking a heterogeneous network as an example. For example, the second base station may be a macro base station (or a macro transmission point, which may be referred to as an MTP in this text), and a macro cell generated by the macro base station may serve for the user equipment; and the first base station may be a small base station (which may be referred to as an STP in this text), and a small cell generated by the small base station may serve for the user equipment. The first base station and the second base station may exchange information via an X2 interface, or may exchange information by defining a new air-interface format, without using an X2 interface.

It should be noted that this disclosure is not limited thereto, and a particular scenario may be determined as actually demanded. Following description shall be given by taking a scenario that the MTP performs downlink transmission and the STP performs uplink transmission in the heterogeneous network as an example. Furthermore, it is also applicable to other network structures or scenarios. For example, it is also applicable to a scenario where the MTP performs uplink transmission and the STP performs downlink transmission.

In the scenario where the MTP performs downlink transmission and the STP performs uplink transmission in the heterogeneous network, the MTP which is taken as a transmitting device will generate interference to the STP which is taken as a receiving device. Usually, the receiving device may obtain information corresponding to a channel between the transmitting device and the receiving device by channel estimation. However, in an existing LTE system, a downlink adopts orthogonal frequency division multiplexing (OFDM) transmission, and an uplink adopts single-carrier frequency division multiplexing (SC-FDMA) transmission, that is, the STP which is taken as a receiving device is unable to estimate the information corresponding to the channel between the MTP and the STP.

In an embodiment, in order to obtain the information corresponding to the channel between the MTP and the STP, the STP may, at an idle timeslot, receive a reference signal transmitted by the MTP, and estimate channel state information (CSI) between the MTP and the STP, that is, obtaining CSI between the first base station and the second base station by channel estimation.

Alternatively, information on measurement of the channel between the first base station and the second base station may be obtained by performing corresponding radio resource measurement, such as reference signal received power (RSRP), and/or reference signal received quality (RSRQ), etc.

Hence, even though the first base station and the second base station have no X2 connection therebetween, by forwarding by the user equipment, the second base station can obtain the first channel information corresponding to the channel between the first base station and the second base station. The first channel information may be a parameter (such as CSI) characterizing a short term or an instant, or may be a parameter (such as RSRP and/or RSRQ) characterizing a long term.

In block 101, the user equipment may receive one or more first channel information transmitted by one or more first base stations. The first channel information may be transmitted by the first base station via a master information block (MIB) and/or a system information block (SIB), or via downlink control information (DCI).

FIG. 2 is a schematic diagram of transmitting the first channel information by the first base station to the user equipment of the embodiment of this disclosure. As shown in FIG. 2, there are, for example, two first base stations, STP 1 and STP 2, in the heterogeneous network. STP 1 may broadcast information corresponding to a first channel between STP 1 and the MTP to UE 1 and UE 2 under its coverage, and STP 2 may broadcast information corresponding to a first channel between STP 2 and the MTP to UE 2 and UE 3 under its coverage.

In block 102, the user equipment may report identification information of the first base station to which one or more first channel information corresponds, to the second base station, and may further report the one or more first channel information, to the second base station.

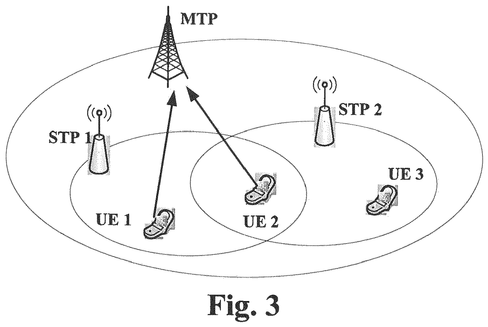

FIG. 3 is a schematic diagram of reporting information by the user equipment to the second base station of the embodiment of this disclosure. As shown in FIG. 3, UE 1 may report information corresponding to a first channel between STP 1 and STP 2 and/or identification information of STP 1 to the MTP, and UE 2 may report information corresponding to a first channel between STP 2 and the MTP and/or identification information of STP 2 to the MTP.

Furthermore, a scenario of reporting by UE 3 is not shown in FIG. 3. And the UE may feed back as demanded; for example, which user equipment needs to report the first channel information and/or the identification information may be configured by the second base station by transmitting higher layer signaling.

Hence, by forwarding information by the user equipment, the MTP can obtain the first channel information necessary for flexible duplex transmission, and the MTP can further obtain the second channel information corresponding to a channel between the user equipment and the MTP. The MTP can make reasonable scheduling decision according to such information, thereby supporting that the STPs and the user equipment perform flexible uplink and downlink transmission at the same time.

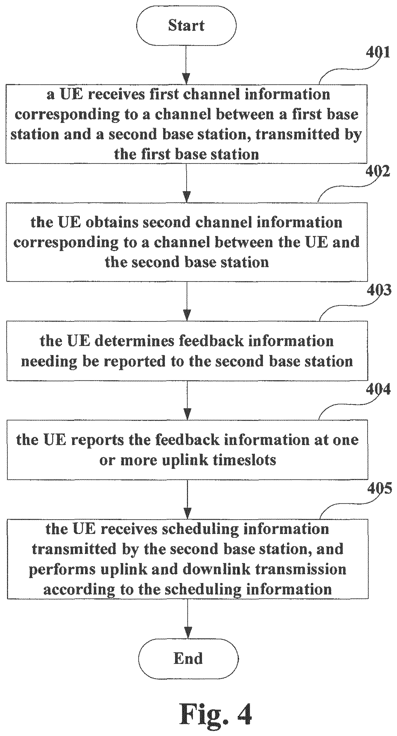

FIG. 4 is another flowchart of the information transmission method of the embodiment of this disclosure, which shall be further described from the user equipment side. As shown in FIG. 4, the information transmission method includes:
Block 401: a user equipment receives first channel information corresponding to a channel between a first base station and a second base station, transmitted by the first base station.
Block 402: the user equipment obtains second channel information corresponding to a channel between the user equipment and the second base station.

In an embodiment, the second channel information may be a parameter (such as CSI obtained by channel estimation) characterizing a short term or an instant, or may be a parameter (such as RSRP and/or RSRQ obtained by radio resource measurement) characterizing a long term.

Block 403: the user equipment determines feedback information needing be reported to the second base station.

In an embodiment, the user equipment may report identification information of the first base station to which the first channel information corresponds and/or the first channel information to the second base station; and furthermore, it may report the second channel information to the second base station.

Particular contents of the feedback information may be determined according to an actual scenario, such as being determined according to direction information, as described later; however, this disclosure is not limited thereto.

Block 404: the user equipment reports the feedback information at one or more uplink timeslots.

In an embodiment, the identification information of the first base station to which the first channel information corresponds and/or the first channel information may be fed back to the second base station at a timeslot, and the second channel information may be fed back to the second base station at another timeslot; or the above feedback information may be transmitted at one timeslot; however, this disclosure is not limited thereto, and a feedback occasion and mode may be determined as actually demanded.

Block 405: the user equipment receives scheduling information transmitted by the second base station, and performs uplink and downlink transmission according to the scheduling information.

In an embodiment, for example, the second base station may schedule the first base station and the user equipment. Hence, the user equipment and the first base station may perform flexible uplink and downlink transmission at the same time, thereby avoiding or alleviating interference between multiple devices in performing uplink and downlink transmission.

The above description is given from the user equipment side, and the following description shall be given from view points of multiple devices (the first base station, the user equipment and the second base station).

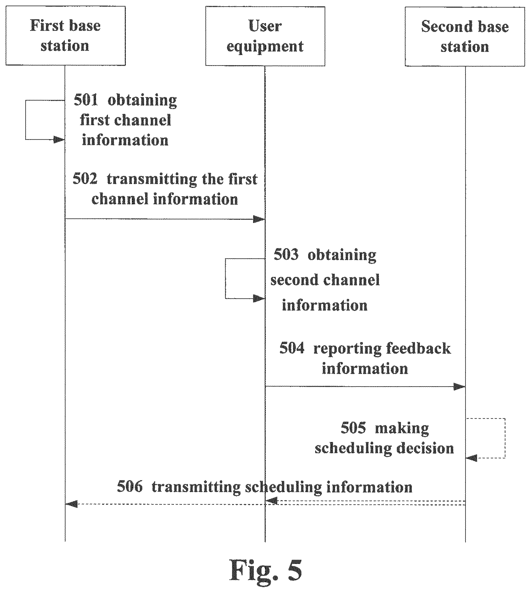

FIG. 5 is a further flowchart of the information transmission method of Embodiment 1 of this disclosure, in which exchange between the user equipment, the first base station and the second base station is shown. As shown in FIG. 5, the information transmission method includes:
501: the first base station obtains the first channel information corresponding to the channel between the first base station and the second base station.

In an embodiment, the CSI between the first base station and the second base station may be obtained by channel estimation, and/or, such as the RSRP and/or the RSRQ between the first base station and the second base station may be obtained by radio resource measurement. For example, the STP may, at an idle timeslot, receive a reference signal transmitted by the MTP, and estimate the CSI between the STP and the MTP.

For the sake of simplicity, following description shall be given by taking the scenario that the first channel information is CSI as an example; the CSI contains direction information, such as one or more of the following information: a beam index (BI), a precoding matrix indicator (PMI), and a channel state information reference signal (CSI-RS) resource indicator (CRI); however, this disclosure is not limited thereto, and other first channel information may also be process similarly.

502: the first base station transmits the first channel information to the user equipment.

In an embodiment, for example, the STP may broad/transmit the CSI of the channel between the STP and the MTP and an index of the STP to a user equipment under coverage of the STP. For example, the STP may broad information via an MIB or an SIB, or may transmit information via DCI.

503: the user equipment obtains the second channel information corresponding to the channel between the user equipment and the second base station.

In an embodiment, for example, the user equipment may obtain the CSI between the user equipment and the second base station by channel estimation, and/or, obtain the RSRP and/or the RSRQ of the channel between the user equipment and the second base station by radio resource measurement, etc.

504: the user equipment reports feedback information to the second base station.

In an embodiment, the user equipment may report the identification information of the first base station to which the first channel information corresponds and/or the first channel information; and furthermore, it may also report the second channel information; for example, the user equipment having a demand for downlink communication forwards received information on the STP together with information of itself that is to be fed back to the MTP at an uplink timeslot.

In an embodiment, the user equipment reports the information to the second base station by periodically feeding back or by aperiodically feeding back; and furthermore, the above feedback information may be reported at the same time, or may be respectively reported at different moments.

In one implementation, the identification information of the first base station in the reported information may include identification information of the first base station corresponding to the first channel information which is in the same direction as the second channel information (for example, BIs/PMIs/CRIs are the same, that is, they are unsuitable for performing uplink and downlink transmission at the same time).

For example, each user equipment feeds back a BI/PMI/CRI of itself to the MTP, and feeds back indices of STPs having identical BIs/PMIs/CRIs; taking FIG. 3 and a BI as an example, if a BI of UE 1 itself (i.e. a BI of a channel between UE 1 and the MTP) is 4 and a BI transmitted by STP 1 to UE 1 (i.e. a BI of a channel between STP 1 and the MTP) is also 4, UE 1 transmit identification information of STP 1 to the MTP. In this way, the MTP may avoid scheduling the user equipment and the STP together to perform flexible uplink and downlink transmission, thereby avoiding or alleviating interference.

In another implementation, the identification information of the first base station in the reported information may include identification information of one or more first base stations adapted for performing uplink and downlink transmission with the user equipment at the same time.

For example, each user equipment feeds back a BI/PMI/CRI of itself to the MTP, and feeds back an index of an STP adapted for performing flexible uplink and downlink transmission with the user equipment, and may further feed back a BI/PMI/CRI of the STP. Here, the number of STPs adapted for performing flexible uplink and downlink transmission with the user equipment may be one or more.

In a further implementation, the identification information of the first base station in the reported information may include identification information of the first base stations corresponding to all first channel information received by the user equipment.

For example, each user equipment feeds back a BI/PMI/CRI of itself to the MTP, and feeds back all received indices of STPs, and may further feed back BIs/PMIs/ CRIs transmitted by all STPs; and a relative large amount of feedback may be concerned in such an implementation.

It should be noted that the index of the STP may be a unique index of the STP in a whole network, or may be indices temporarily set for all STPs under, for example, coverage of a macro base station; however, this disclosure is not limited thereto; and furthermore, the above implementations are described taking the BIs/PMIs/CRIs as examples only, and other channel information may also be processed correspondingly.

505: the second base station makes scheduling decision according to the reported feedback information.

In an embodiment, the second base station may make scheduling decision based on the second channel information and the identification information of the first base station to which the first channel information corresponds, or may make scheduling decision based on the second channel information, the first channel information and the identification information of the first base station to which the first channel information corresponds.

506: the second base station transmits scheduling information to the first base station and/or the user equipment.

In an embodiment, for example, the second base station may schedule the first base station and the user equipment, so that the first base station and the user equipment perform uplink and downlink transmission at the same time.

In an embodiment, one or more user equipments may perform uplink and downlink transmission with one or more first base stations (for example, one user equipment is in downlink transmission, and multiple first base stations are in uplink transmission), while first base stations corresponding to different user equipments may be different, and a particular scenario may be determined as actually demanded.

It should be noted that FIG. 5 only schematically explains the embodiment of this disclosure; however, this disclosure is not limited thereto. For example, an order of execution of the steps may be appropriately adjusted; for example, 503 may be executed before 501, or may be executed with 501 in parallel; and furthermore, some other steps may be added, or some of these steps may be reduced; for example, 504 may be executed at different moments, in which the first channel information and the second channel information may be transmitted respectively. And appropriate modifications may be made by those skilled in the art according to what is described above, without being limited to those contained in the above figure.

It can be seen from the above embodiment that the first base station obtains the information corresponding to a channel between the first base station and the second base station and transmits the channel information to the user equipment, and the user equipment transmits the channel information to the second base station. Hence, the second base station making-scheduling decision can obtain channel information necessary for flexible duplex transmission, thereby supporting that multiple devices perform flexible uplink and downlink transmission, and avoiding or alleviating interference between the multiple devices in performing uplink and downlink transmission.

### Embodiment 2

The embodiment of the present disclosure provides an information transmission method, applicable to a first base station, with contents identical to those in Embodiment 1 being not going to be described herein any further.

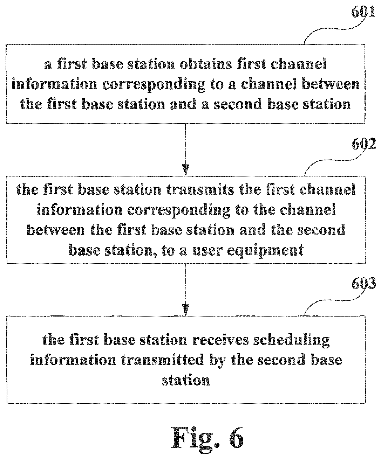

FIG. 6 is a flowchart of the information transmission method of the embodiment of this disclosure. As shown in FIG. 6, the information transmission method includes:
Block 601: a first base station obtains first channel information corresponding to a channel between the first base station and a second base station; and
Block 602: the first base station transmits the first channel information corresponding to the channel between the first base station and the second base station, to a user equipment.

In an embodiment, the first channel information may include: CSI obtained through channel estimation. For example, in order to obtain information corresponding to a channel between an MTP and an STP, the STP may, at an idle timeslot, receive a reference signal transmitted by the MTP, and estimate the CSI between the MTP and the STP, that is, obtaining the CSI between the first base station and the second base station.

Or, the first channel information may include: channel measurement information obtained through radio resource measurement. For example, the first base station may perform corresponding radio resource measurement, so as to obtain RSRP and/or RSRQ between the first base station and the second base station, etc.

Hence, the first base station can obtain the first channel information corresponding to the channel between the first base station and the second base station, the first channel information may be a parameter (such as CSI) characterizing a short term or an instant, or may be a parameter (such as RSRP and/or RSRQ) characterizing a long term. And the first base station may transmit the first channel information to the user equipment.

As shown in FIG. 6, the information transmission method may further include:
Block 603: the first base station receives scheduling information transmitted by the second base station.

In an embodiment, for example, the second base station may schedule the first base station and the user equipment, so that the first base station and the user equipment perform uplink and downlink transmission at the same time.

In an embodiment, one or more user equipments may perform uplink or downlink transmission with one or more first base stations at the same time (for example, one user equipment is in downlink transmission, and multiple first base stations are in uplink transmission), and first base stations corresponding to different user equipments may be different, and a particular scenario may be determined as actually demanded.

In an embodiment, the scheduling information may be transmitted by using a new DCI format other than the existing formats 1-5. For example, the new DCI format may be defined as a DCI format 6.

For example, when the MTP performs downlink transmission and the STP performs uplink transmission, DCI format 6 is used for related uplink and downlink transmission scheduling, and the following information may be contained:
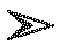 a physical uplink control channel (PUCCH) and/or physical uplink shared channel (PUSCH) resource used by the user equipment performing uplink transmission with the STP; and/or
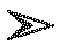 a transmission power control command of a PUCCH and PUSCH of the user equipment performing uplink transmission.

Or, in addition to the above information, information in DCI format 2D is also contained. The MTP may transmit the scheduling information via DCI format 6, and the STP and corresponding user equipment may receive the scheduling information carried by DCI format 6, and perform flexible uplink and downlink transmission accordingly.

It can be seen from the above embodiment that the first base station obtains the information corresponding to a channel between the first base station and the second base station and transmits the channel information to the user equipment, and the user equipment transmits the channel information to the second base station. Hence, the second base station making-scheduling decision can obtain channel information necessary for flexible duplex transmission, thereby supporting that multiple devices perform flexible uplink and downlink transmission, and avoiding or alleviating interference between the multiple devices in performing uplink and downlink transmission.

### Embodiment 3

The embodiment of the present disclosure provides an information transmission method, applicable to a second base station, with contents identical to those in Embodiment 1 or 2 being not going to be described herein any further.

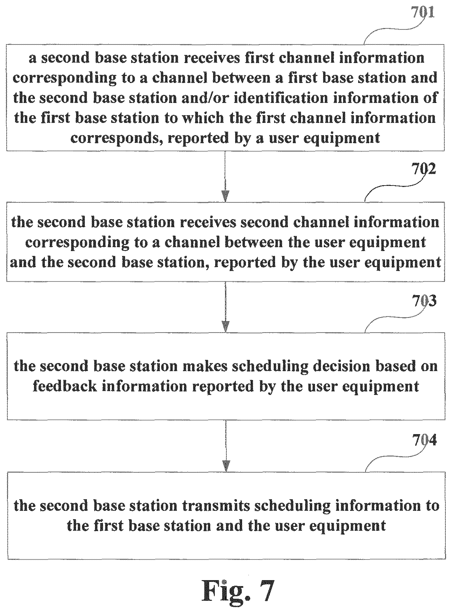

FIG. 7 is a flowchart of the information transmission method of the embodiment of this disclosure. As shown in FIG. 7, the information transmission method includes:
Block 701: a second base station receives first channel information corresponding to a channel between a first base station and the second base station, and/or, identification information of the first base station to which the first channel information corresponds, reported by a user equipment; and
Block 702: the second base station receives second channel information corresponding to a channel between the user equipment and the second base station, reported by the user equipment.

For example, the first channel information and/or the second channel information may include: CSI obtained through channel estimation, and/or channel measurement information obtained through radio resource measurement. However, this disclosure is not limited thereto. For example, they may also be other channel information.

In an embodiment, blocks 701 and 702 may be executed at the same time, such as receiving at the same time the first channel information and the second channel information transmitted by the user equipment. Furthermore, blocks 701 and 702 may not be executed at the same time, such as receiving at different moments of time the first channel information and the second channel information transmitted by the user equipment. And orders of executing blocks 701 and 702 are not limited thereto; for example, block 702 may be executed before block 701.

As shown in FIG. 7, the information transmission method may further include:
Block 703: the second base station makes scheduling decision based on feedback information reported by the user equipment.

In an embodiment, the second base station may make scheduling decision based on feedback information reported by one or more user equipments; and furthermore, in making scheduling decision, the second base station may make reference to first channel information transmitted by one or more user equipments.

Block 704: the second base station transmits scheduling information to the first base station and the user equipment.

In an embodiment, for example, the second base station may schedule the first base station and the user equipment, so that the first base station and the user equipment perform uplink and downlink transmission at the same time.

In an embodiment, the scheduling information may use a new DCI format different from the existing DCI formats 1-5 for transmission. For example, the new DCI format may be defined as a DCI format 6, and related contents in Embodiment 2 may be referred to.

It can be seen from the above embodiment that the first base station obtains the information corresponding to a channel between the first base station and the second base station and transmits the channel information to the user equipment, and the user equipment transmits the channel information to the second base station. Hence, the second base station making-scheduling decision can obtain channel information necessary for flexible duplex transmission, thereby supporting that multiple devices perform flexible uplink and downlink transmission, and avoiding or alleviating interference between the multiple devices in performing uplink and downlink transmission.

### Embodiment 4

The embodiment of the present disclosure provides an information transmission apparatus, configured in a user equipment. This embodiment corresponds to the information transmission method in Embodiment 1, with contents identical to those in Embodiment 1 being not going to be described herein any further.

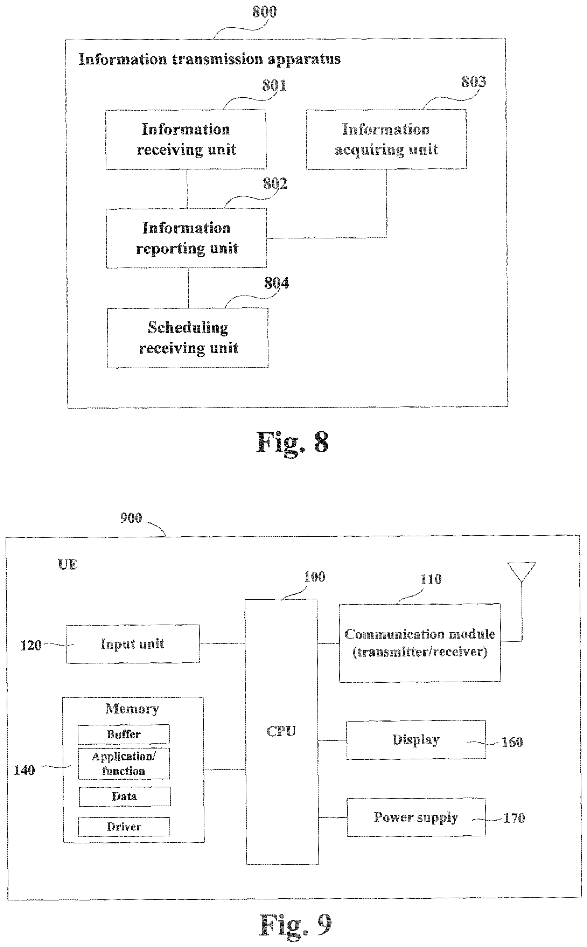

FIG. 8 is a schematic diagram of the information transmission apparatus of the embodiment of this disclosure. As shown in FIG. 8, the information transmission apparatus 800 includes:
an information receiving unit 801 configured to receive first channel information corresponding to a channel between a first base station and a second base station, transmitted by the first base station; and
an information reporting unit 802 configured to report identification information of the first base station to which the first channel information corresponds and/or the first channel information, to the second base station.

As shown in FIG. 8, the information transmission apparatus 800 may further include:
an information acquiring unit 803 configured to obtain second channel information corresponding to a channel between the user equipment and the second base station;
and the information reporting unit 802 is further configured to report the second channel information to the second base station.

As shown in FIG. 8, the information transmission apparatus 800 may further include:
a scheduling receiving unit 804 configured to receive scheduling information transmitted by the second base station, and perform uplink and downlink transmission according to the scheduling information.

In an embodiment, for example, the second base station may schedule the first base station and the user equipment. Hence, the user equipment and the first base station can perform flexible uplink and downlink transmission at the same time, thereby avoiding or alleviating interference between multiple devices in performing uplink and downlink transmission.

In an embodiment, the first channel information and/or the second channel information may include: CSI obtained through channel estimation, and/or channel measurement information obtained through radio resource measurement. However, this disclosure is not limited thereto; for example, they may also be other channel information.

In an embodiment, the first channel information may include direction information, the direction information including one or more of the following information: a BI, a PMI, and a CRI. And the first channel information may be transmitted by the first base station via an MIB and/or an SIB, or via DCI.

In an embodiment, the information reporting unit 802 may report the first channel information and/or the identification information of the first base station to which the first channel information corresponds to the second base station in a periodic feedback manner or an aperiodic feedback manner. And the information reporting unit 802 may also report the second channel information to the second base station in a periodic feedback manner or an aperiodic feedback manner.

In an embodiment, the identification information of the first base station to which the first channel information corresponds may include: identification information of the first base station corresponding to the first channel information which is in the same direction as the second channel information, or identification information of one or more first base stations adapted for performing uplink and downlink transmission with the user equipment at the same time, or identification information of the first base stations corresponding to all first channel information received by the user equipment.

This embodiment further provides a user equipment, configured with the above-described information transmission apparatus 800.

FIG. 9 is a schematic diagram of the user equipment of the embodiment of this disclosure. As shown in FIG. 9, the user equipment 900 may include a central processing unit 100 and a memory 140, the memory 140 being coupled to the central processing unit 100. It should be noted that this figure is illustrative only, and other types of structures may also be used, so as to supplement or replace this structure and achieve a telecommunications function or other functions.

In one implementation, the functions of the information transmission apparatus 800 may be integrated into the central processing unit 100. The central processing unit 100 may be configured to carry out the information transmission method described in Embodiment 1.

For example, the central processing unit 100 may be configured to perform the following control: receiving first channel information corresponding to a channel between a first base station and a second base station transmitted by the first base station; and reporting identification information of the first base station to which the first channel information corresponds and/or the first channel information, to the second base station.

In another implementation, the information transmission apparatus 800 and the central processing unit 100 may be configured separately. For example, the information transmission apparatus 800 may be configured as a chip connected to the central processing unit 100, with its functions being realized under control of the central processing unit 100.

As shown in FIG. 9, the user equipment 900 may further include a communication module 110, an input unit 120, a display 160 and a power supply 170. Functions of the above components are similar to those in the relevant art, and shall not be described herein any further. It should be noted that the user equipment 900 does not necessarily include all the parts shown in FIG. 9, and furthermore, the user equipment 900 may include parts not shown in FIG. 9, and the relevant art may be referred to.

In an embodiment, the user equipment may be configured to use a new transmission mode (TM) different from the existing transmission modes 1-10. For example, the new transmission mode may be defined as TM 11.

For example, if the user equipment is configured by a higher layer to decode for a physical downlink control channel (PDCCH) via cyclic redundancy check (CRC) scrambled by a cell radio network temporary identifier (C-RNTI), the user equipment decodes for the PDCCH and a corresponding physical downlink shared channel (PDSCH) according to Table 1 below:

**Table 1 PDCCH and PDSCH configured by a C-RNTI**

| Transmission mode | DCI format | Search space | Transmission scheme of PDSCH corresponding to PDCCH |
|---|---|---|---|
| TM11 | DCI format 1A | Common or UE specific by C-RNTI | Non-MBSFN subframe: if the number of PBCH antenna ports is one, single-antenna port, port 0 is used; otherwise, transmit diversity |
| | | | MBSFN subframe: single-antenna port, port 7 |
| | DCI format 6 | UE specific by C-RNTI | Up to 8 layer transmission, ports 7-14 or single-antenna port, port 7 or 8 |

For another example, if the user equipment is configured by a higher layer to decode for an enhanced PDCCH (EPDCCH) via CRC scrambled by an C-RNTI, the user equipment decodes for the EPDCCH and a corresponding PDSCH according to Table 2 below:

**Table 2 EPDCCH and PDSCH configured by a C-RNTI**

| Transmission mode | DCI format | Search space | Transmission scheme of PDSCH corresponding to PDCCH |
|---|---|---|---|
| TM 11 | DCI format 1A | UE specific by C-RNTI | Non-MBSFN subframe: if the number of PBCH antenna ports is one, single-antenna port, port 0 is used; otherwise, transmit diversity |
| | | | MBSFN subframe: single-antenna port, port 7 |
| | DCI format 6 | UE specific by C-RNTI | Up to 8 layer transmission, ports 7-14 or single-antenna port, port 7 or 8 |

In existing standards, such as TM 9 and TM 10, the transmission is multiple input multiple output (MIMO) transmission supporting at most 8 data streams. However, DCI format 2D is used in TM 10, and DCI format 2C is used in TM 9. That is, it is supported in TM 10 that multiple antennas of the transmitting side are not at the same base station.

As shown in the above tables 1 and 2, TM 11 may be similar to TM 9 and be MIMO transmission supporting at most 8 data streams. However, in comparison with TM 10, in TM 11, transmission antennas transmitting data at the same time may even not be all at the base stations, and may be at the user equipment (UE performing uplink transmission).

Hence, TM 11 may be configured for a UE performing downlink transmission with the MTP, and the STP performing uplink transmission may also receive corresponding TM configuration, and hence search for DCI format 6 and obtain scheduling information of the user equipment performing uplink transmission by using the STP. Meanwhile, the user equipment performing downlink transmission with the MTP may also obtain downlink scheduling information, especially antenna port information, by searching for DCI format 6.

It should be noted that tables 1 and 2 only schematically show contents of TM 11; however, this disclosure is not limited thereto. Furthermore, reference may be made to related standards for contents of transmission modes (such as TM 1-10), which shall not be described herein any further

It can be seen from the above embodiment that the first base station obtains the information corresponding to a channel between the first base station and the second base station and transmits the channel information to the user equipment, and the user equipment transmits the channel information to the second base station. Hence, the second base station making-scheduling decision can obtain channel information necessary for flexible duplex transmission, thereby supporting that multiple devices perform flexible uplink and downlink transmission, and avoiding or alleviating interference between the multiple devices in performing uplink and downlink transmission.

### Embodiment 5

The embodiment of the present disclosure provides an information transmission apparatus, configured in a first base station. This embodiment corresponds to the information transmission method in Embodiment 2, with contents identical to those in Embodiment 1 or 2 being not going to be described herein any further.

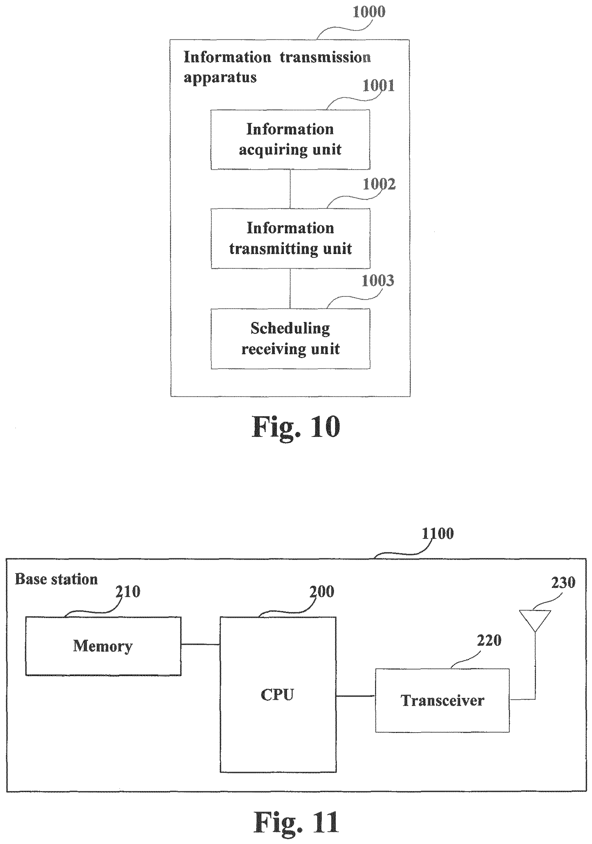

FIG. 10 is a schematic diagram of the information transmission apparatus of the embodiment of this disclosure. As shown in FIG. 10, the information transmission apparatus 1000 includes:
an information acquiring unit 1001 configured to obtain first channel information corresponding to a channel between the first base station and a second base station; and
an information transmitting unit 1002 configured to transmit the first channel information corresponding to the channel between the first base station and the second base station, to a user equipment.

In an embodiment, the first channel information may include: CSI obtained through channel estimation, and/or channel measurement information (such as RSRP or RSRQ) obtained through radio resource measurement. However, this disclosure is not limited thereto; for example, it may also be other channel information.

As shown in FIG. 10, the information transmission apparatus 1000 may further include:
a scheduling receiving unit 1003 configured to receive scheduling information transmitted by the second base station, and perform uplink and downlink transmission according to the scheduling information.

In an embodiment, for example, the second base station may schedule the first base station and the user equipment, so that the first base station and the user equipment perform uplink and downlink transmission at the same time.

The embodiment of this disclosure further provides a base station, configured with the above-described information transmission apparatus 1000.

FIG. 11 is a schematic diagram of the base station of the embodiment of this disclosure. As shown in FIG. 11, the base station 1100 may include a central processing unit (CPU) 200 and a memory 210, the memory 210 being coupled to the central processing unit 200. The memory 210 may store various data, and furthermore, it may store a program for information processing, and execute the program under control of the central processing unit 200.

The central processing unit 200 may be configured to carry out the information transmission method in Embodiment 2. For example, the central processing unit 200 may be configured to perform the following control: obtaining first channel information corresponding to a channel between the first base station and a second base station; and transmitting the first channel information corresponding to the channel between the first base station and the second base station to a user equipment.

Furthermore, as shown in FIG. 11, the base station 1100 may include a transceiver 220, and an antenna 230, etc. Functions of the above components are similar to those in the relevant art, and shall not be described herein any further. It should be noted that the base station 1100 does not necessarily include all the parts shown in FIG. 11, and furthermore, the base station 1100 may include parts not shown in FIG. 11, and the relevant art may be referred to.

It can be seen from the above embodiment that the first base station obtains the information corresponding to a channel between the first base station and the second base station and transmits the channel information to the user equipment, and the user equipment transmits the channel information to the second base station. Hence, the second base station making-scheduling decision can obtain channel information necessary for flexible duplex transmission, thereby supporting that multiple devices perform flexible uplink and downlink transmission, and avoiding or alleviating interference between the multiple devices in performing uplink and downlink transmission.

### Embodiment 6

The embodiment of the present disclosure provides an information transmission apparatus, configured in a second base station. This embodiment corresponds to the information transmission method in Embodiment 3, with contents identical to those in embodiments 1-3 being not going to be described herein any further.

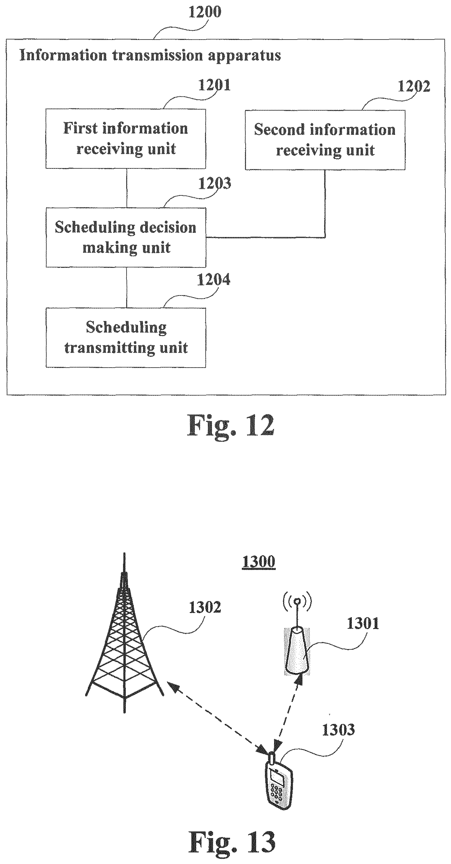

FIG. 12 is a schematic diagram of the information transmission apparatus of the embodiment of this disclosure. As shown in FIG. 12, the information transmission apparatus 1200 includes:
a first information receiving unit 1201 configured to receive first channel information corresponding to a channel between a first base station and the second base station and/or identification information of the first base station to which the first channel information corresponds, reported by a user equipment; and
a second information receiving unit 1202 configured to receive second channel information corresponding to a channel between the user equipment and the second base station reported by the user equipment.

In an embodiment, the first channel information and/or the second channel information may include: CSI obtained through channel estimation, and/or channel measurement information obtained through radio resource measurement. However, this disclosure is not limited thereto; for example, they may also be other channel information.

As shown in FIG. 12, the information transmission apparatus 1200 may further include:
a scheduling decision making unit 1203 configured to make scheduling decision based on feedback information reported by the user equipment; and
a scheduling transmitting unit 1204 configured to transmit scheduling information to the first base station and the user equipment.

In an embodiment, for example, the second base station may schedule the first base station and the user equipment, so that the first base station and the user equipment perform uplink and downlink transmission at the same time.

In an embodiment, the scheduling information may use a new DCI format different from the existing downlink control information formats 1-5. For example, the new DCI format may be defined as a DCI format 6, and related contents in Embodiment 2 may be referred to.

The embodiment of this disclosure further provides a base station, configured with the above-described information transmission apparatus 1200. FIG. 11 may be referred to for a structure of the base station. As shown in FIG. 11, the base station may include a central processing unit (CPU) 200 and a memory 210, the memory 210 being coupled to the central processing unit 200. The memory 210 may store various data, and furthermore, it may store a program for information processing, and execute the program under control of the central processing unit 200.

The central processing unit 200 may be configured to carry out the information transmission method in Embodiment 3. For example, the central processing unit 200 may be configured to perform the following control: receiving first channel information corresponding to a channel between a first base station and the second base station and/or identification information of the first base station to which the first channel information corresponds reported by a user equipment; and receiving second channel information corresponding to a channel between the user equipment and the second base station reported by the user equipment.

It can be seen from the above embodiment that the first base station obtains the information corresponding to a channel between the first base station and the second base station and transmits the channel information to the user equipment, and the user equipment transmits the channel information to the second base station. Hence, the second base station making scheduling decision can obtain channel information necessary for flexible duplex transmission, thereby supporting that multiple devices perform flexible uplink and downlink transmission, and avoiding or alleviating interference between the multiple devices in performing uplink and downlink transmission.

### Embodiment 7

The embodiment of the present disclosure provides a communication system, with contents identical to those in embodiments 1-6 being not going to be described herein any further.

FIG. 13 is a schematic diagram of the communication system of the embodiment of this disclosure. As shown in FIG. 13, the communication system 1300 may include a first base station 1301, a second base station 1302 and a user equipment 1303.

The first base station 1301 is configured to obtain first channel information corresponding to a channel between the first base station 1301 and the second base station 1302, and transmit the first channel information corresponding to the channel between the first base station 1301 and the second base station 1302 to the user equipment 1303.

The user equipment 1303 is configured to receive the first channel information from the first base station 1301; and report identification information of the first base station 1301 to which the first channel information corresponds and/or the first channel information to the second base station 1302.

The second base station 1302 is configured to receive feedback information reported by one or more user equipments 1303. Hence, the second base station 1302 can make scheduling decision based on the information.

In an embodiment, the user equipment 1303 may be configured to use a new transmission mode, such as TM 11.

An embodiment of the present disclosure provides a computer readable program code, which, when executed in a user equipment, will cause a computer unit to carry out the information transmission method described in Embodiment 1 in the user equipment.

An embodiment of the present disclosure provides a computer readable medium, including a computer readable program code, which will cause a computer unit to carry out the information transmission method described in Embodiment 1 in a user equipment.

An embodiment of the present disclosure provides a computer readable program code, which, when executed in a base station, will cause a computer unit to carry out the information transmission method described in Embodiment 2 or 3 in the base station.

An embodiment of the present disclosure provides a computer readable medium, including a computer readable program code, which will cause a computer unit to carry out the information transmission method described in Embodiment 2 or 3 in a base station.

The above apparatuses of the present disclosure may be implemented by hardware, or by hardware in combination with software. The present disclosure relates to such a computer-readable program that when the program is executed by a logic device, the logic device is enabled to carry out the apparatus or components as described above, or to carry out the methods or steps as described above. The present disclosure also relates to a storage medium for storing the above program, such as a hard disk, a floppy disk, a CD, a DVD, and a flash memory, etc.

The information transmission apparatuses and/or information transmission methods described in conjunction with the embodiments of this disclosure may be directly embodied as hardware, software modules executed by a processor, or a combination thereof. For example, one or more functional block diagrams and/or one or more combinations of the functional block diagrams shown in FIG. 8 (such as the information receiving unit, and the information reporting unit, etc.) may either correspond to software modules of procedures of a computer program, or correspond to hardware modules. Such software modules may respectively correspond to the steps shown in FIG. 1. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in figures may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in figures may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present disclosure. Various variants and modifications may be made by those skilled in the art according to the principle of the present disclosure, and such variants and modifications fall within the scope of the present disclosure.

## Claims

1. An information transmission apparatus, configured in a user equipment, the information transmission apparatus comprising:
an information receiving unit configured to receive first channel information corresponding to a channel between a first base station and a second base station, transmitted by the first base station; and
an information reporting unit configured to report identification information of the first base station to which the first channel information corresponds and/or the first channel information, to the second base station.

2. The information transmission apparatus according to claim 1, wherein the information transmission apparatus further comprises:
an information acquiring unit configured to obtain second channel information corresponding to a channel between the user equipment and the second base station;
and the information reporting unit is further configured to report the second channel information to the second base station.

3. The information transmission apparatus according to claim 2, wherein the information transmission apparatus further comprises:
a scheduling receiving unit configured to receive scheduling information transmitted by the second base station and perform uplink and downlink transmission according to the scheduling information.

4. The information transmission apparatus according to claim 2, wherein the first channel information and/or the second channel information comprise(s): channel state information obtained through channel estimation, and/or, channel measurement information obtained through radio resource measurement.

5. The information transmission apparatus according to claim 1, wherein the first channel information comprises direction information, the direction information comprising one or more of the following information: a beam index, a precoding matrix indicator, and a channel state information reference signal resource indicator.

6. The information transmission apparatus according to claim 1, wherein the first channel information is transmitted by the first base station via a main information block and/or a system information block, or via downlink control information.

7. The information transmission apparatus according to claim 1, wherein the information reporting unit is configured to report the identification information of the first base station to which the first channel information corresponds and/or the first channel information to the second base station in a periodic feedback manner or an aperiodic feedback manner.

8. The information transmission apparatus according to claim 2, wherein the identification information of the first base station to which the first channel information corresponds comprises:
identification information of the first base station corresponding to the first channel information which is in the same direction as that indicated by the second channel information,
or identification information of one or more first base stations adapted for performing uplink and downlink transmission with the user equipment at the same time,
or identification information of the first base stations corresponding to all first channel information received by the user equipment.

9. An information transmission apparatus, configured in a first base station, the information transmission apparatus comprising:
an information acquiring unit configured to obtain first channel information corresponding to a channel between the first base station and a second base station; and
an information transmitting unit configured to transmit the first channel information corresponding to the channel between the first base station and the second base station, to a user equipment.

10. The information transmission apparatus according to claim 9, wherein the first channel information comprises: channel state information obtained through channel estimation, and/or, channel measurement information obtained through radio resource measurement.

11. The information transmission apparatus according to claim 9, wherein the information transmission apparatus further comprises:
a scheduling receiving unit configured to receive scheduling information transmitted by the second base station, and perform uplink and downlink transmission according to the scheduling information.

12. An information transmission apparatus, configured in a second base station, the information transmission apparatus comprising:
a first information receiving unit configured to receive first channel information corresponding to a channel between a first base station and the second base station and/or identification information of the first base station to which the first channel information corresponds, reported by user equipment; and
a second information receiving unit configured to receive second channel information corresponding to a channel between the user equipment and the second base station, reported by the user equipment.

13. The information transmission apparatus according to claim 12, wherein the first channel information and/or the second channel information comprise(s): channel state information obtained through channel estimation, and/or, channel measurement information obtained through radio resource measurement.

14. The information transmission apparatus according to claim 12, wherein the information transmission apparatus further comprises:
a scheduling decision making unit configured to make scheduling decision based on feedback information reported by the user equipment; and
a scheduling transmitting unit configured to transmit scheduling information to the first base station and the user equipment.

15. The information transmission apparatus according to claim 14, wherein the scheduling information uses a downlink control information format different from the existing downlink control information formats 1-5.

16. A communication system, comprising:
a user equipment configured with the information transmission apparatus as claimed in claim 1;
a first base station configured with the information transmission apparatus as claimed in claim 9; and
a second base station configured with the information transmission apparatus as claimed in claim 12.

17. The communication system according to claim 16, wherein the user equipment is configured to use a transmission mode different from the existing transmission modes 1-10.
